Europäisches Patentamt

European Patent Office

Office européen des brevets

(19)

(11) Veröffentlichungsnummer: **0 143 406**
**B1**

(12) **EUROPÄISCHE PATENTSCHRIFT**

(45) Veröffentlichungstag der Patentschrift: **14.03.90**

(51) Int. Cl.⁵: **C 09 B 67/26, D 06 P 1/38**

(21) Anmeldenummer: **84113868.8**

(22) Anmeldetag: **16.11.84**

(54) **Flüssige Reaktivfarbstoffzubereitungen und ihre Verwendung.**

(30) Priorität: **24.11.83 DE 3342432**

(43) Veröffentlichungstag der Anmeldung:
**05.06.85 Patentblatt 85/23**

(45) Bekanntmachung des Hinweises auf die
Patenterteilung:
**14.03.90 Patentblatt 90/11**

(84) Benannte Vertragsstaaten:
**CH DE FR GB IT LI**

(56) Entgegenhaltungen:
**EP-A-0 014 326**
**EP-A-0 057 905**
**EP-A-0 069 300**
**FR-A-2 264 850**

(73) Patentinhaber: **HOECHST AKTIENGESELLSCHAFT**
**Postfach 80 03 20**
**D-6230 Frankfurt am Main 80 (DE)**

(72) Erfinder: **Opitz, Konrad, Dr.**
**Schwedenstrasse 22**
**D-6237 Liederbach (DE)**

## Beschreibung

Zum Färben und Bedrucken von stickstoffhaltigen Fasermaterialien, wie Wolle, Seide oder synthetischen Polyamidfasern, und vor allem von Fasermaterialien aus natürlicher oder regenerierter Cellulose sowie von diese Fasern enthaltenden Mischgeweben werden in großem Umfang Reaktivfarbstoffe verwendet, die in Form trockener und nicht färbende Stellmittel enthaltender Pulver eingesetzt werden. Außer durch die unangenehme, auf der Pulverform beruhenden Staubentwicklung wird das Ansetzen von Druckpasten sowie von Klotz- und Färbeflotten mit solchen Farbstoffpulvern vor allem dadurch erschwert, daß viele der Farbstoffpulver wegen des Gehalts an mineralölhaltigen Entstaubungsmitteln, was auch zu öligen Abscheidungen führen kann, schlecht benetzen, zur Klumpenbildung neigen oder zu wenig löslich sind.

Diese Nachteile von Farbstoffpulvern machen sich bei denjenigen Färbeverfahren besonders unangenehm bemerkbar, bei denen es darauf ankommt, hohe Farbstoffkonzentrationen bei niedrigen Temperaturen zu erreichen, so z.B. beim Klotz-Kurzverweil-Verfahren. Hier sind flüssige Färbepräparationen erwünscht, die den pulverförmigen deutlich überlegen sind. Von gut wasserlöslichen Reaktivfarbstoffen lassen sich mit Wasser als alleinigem Lösungsmittel flüssige Färbepräparationen mit Farbstoffgehalten von praktischem Interesse herstellen, wie sie beispielsweise aus den deutschen Patentschriften 2 417 255, 2 454 893 und 2 454 908 bekannt sind. Überträgt man die darin enthaltenen Lehren jedoch auf C.I. Reactive Blue 19, so muß man feststellen, daß man damit zwar derartige flüssige Färbepräparationen herstellen kann, diese aber beträchtliche anwendungstechnische Nachteile aufweisen, die mit den Reaktivfarbstoffen, die in den zitierten deutschen Patentschriften beschrieben sind, nicht auftreten. Diese anwendungstechnischen Nachteile bestehen darin, daß man mit derartigen flüssigen Färbepräparationen, die C.I. Reactive Blue 19 enthalten, Klotz- und Färbeflotten mit völlig unzureichender Alkalibeständigkeit erhält. Um egale Färbungen mit guter Farbausbeute zu erhalten, ist es erforderlich, daß der Farbstoff in den Färbe- und Klotzflotten nach Zusatz der notwendigen Mengen an Alkali und Salzen ausreichend lang in Lösung bleibt und nicht ausfällt. Zur Prüfung der Alkalibeständigkeit von Klotz- und Färbeflotten sind verschiedene Tests üblich, bei denen nach Zusatz von NaCl oder $Na_2SO_4$ und von Alkali, z.B. in Form von Natronlauge, Soda, Wasserglas oder Trinatriumphosphat, allein oder auch in Mischung, durch Tüpfeln geprüft wird, ob und wann Farbstoff ausfällt. Solche Farbstoffausfällungen sind von großem Nachteil, weil sie unegale oder fleckige Färbungen verursachen und auch die Farbausbeute mindern. In den Tests dürfen also in einer etwa der Färbedauer entsprechenden Zeit möglichst keine Farbstoffausfällungen auftreten. Eine flüssige Färbepräparation von C.I. Reactive Blue 19 ist also umso besser geeignet, je länger die Zeit bis zum Auftreten von Farbstoffausfällungen bei den Tests ist. Optimale Eignung ist dann gegeben, wenn in der verlangten Zeitdauer gar keine Farbstoffausfällung auftritt. In der Vergangenheit sind nun mannigfache Anstrengungen unternommen worden, um diese Nachteile rein wäßriger flüssiger Färbepräparationen, die C.I. Reactive Blue 19 enthalten, zu beseitigen.

So sind aus der Japanischen Offenlegungsschrift 103 250/1981 wäßrige Färbepräparationen von C.I. Reactive Blue 19 bekannt, die durch den Gehalt eines Alkylnaphthalinsulfonsäure-Formaldehyd-Kondensationsproduktes gekennzeichnet sind. Damit wird zwar eine Verbesserung gegenüber einer rein wäßrigen Färbepräparation erreicht; das Ausmaß der verbesserten Alkalibeständigkeit genügt jedoch noch nicht, um den Ansprüchen der Färbereipraxis gerecht zu werden.

Wendet man die in den Patent- bzw. Offenlegungsschriften GB-PS 1 060 063, DE-OS 2 529 658 oder DE-OS 31 26 081 für in Wasser allein weniger gut lösliche Reaktivfarbstoffe beschriebenen Lösevermittler bzw. Kombinationen von Lösevermittlern mit anionischen Dispergiermitteln auf C.I. Reactive Blue 19 an, obwohl sie lediglich zur Erzielung höherer Farbstoffgehalte in der flüssigen Färbepräparation bzw. zur Verbesserung der Lagerstabilität solcher flüssiger Färbepräparationen beschrieben werden, so findet man ebenfalls eine geringfügige, die praktischen Erfordernisse aber bei weitem nicht erfüllende Verbesserung der Alkalibeständigkeit. Verwendet man das in der GB-PS 1 060 063 genannte ε-Caprolactam als Lösevermittler, so stellt man bei Warmlagerung außerdem deutliche Farbstärkeverluste fest. Weiterhin sind aus der Japanischen Offenlegungsschrift Sho-58-1751 flüssige Färbepräparationen von Reaktivfarbstoffen, einschließlich C.I. Reactive Blue 19, bekannt, die durch Zusätze nichtionogener Dispergiermitel aus der Gruppe der α-Methylbenzylgruppen enthaltenden Oxalkylate aromatischer Hydroxyverbindungen gekennzeichnet sind. Diese Zusätze verbessern die Lagerbeständigkeit, vor allem im Hinblick auf unerwünschte Viskositätszunahme beim Lagern bei niedrigen Temperaturen. Sie stellen jedoch keine Lösung des Problems der Alkalibeständigkeit von C.I. Reactive Blue 19 enthaltenden Klotz- und Färbeflotten dar.

Eine Verbesserung der Alkalibeständigkeit von Klotz- und Färbeflotten, die unter Verwendung C.I. Reactive Blue 19 enthaltender flüssiger Färbepräparationen hergestellt werden, wird, insbesondere gegenüber den flüssigen Färbepräparationen der Japanischen Offenlegungsschrift 103 250/81, mit den in der EPA 0 037 117 beschriebenen flüssigen Färbepräparationen erreicht. Diese flüssigen Färbepräparationen des C.I. Reactive Blue 19 enthalten neben einem Kondensationsprodukt von Formaldehyd mit Naphthalinsulfosäure, die durch Alkylgruppen substituiert sein kann, noch 0,1 % bis 10 % eines nichtionogenen Dispergiermittels. Die verbesserte Alkalibeständigkeit der damit hergestellten Klotz- und Färbeflotten wird jedoch mit dem gravierenden Nachteil einer ausgeprägten Neigung zur Schaumbildung erkauft, die sowohl bei der flüssigen Färbepräparation selbst als auch bei den Klotz- und Färbeflotten und den resultierenden Abwässern auftritt.

Gegenstand der vorliegenden Erfindung sind nun C.I. Reactive Blue 19 enthaltende flüssige Färbepräparationen, welche alle die vorstehend aufgeführten Nachteile nicht zeigen, sondern die neben ausgezeichneter Lagerbeständigkeit bei niedrigen wie bei erhöhten Temperaturen ohne Farbstoffabscheidungen, ohne Farbstärkeverlust und ohne Verschlechterung der Fließfähigkeit eine einwandfreie Alkalibeständigkeit damit hergestellter Klotz- und Färbeflotten ergeben. Darüberhinaus neigen die erfindungsgemäßen flüssigen Färbepräparationen ebensowenig wie damit hergestellte Klotz- und Färbeflotten oder daraus resultierende Abwässer zur Schaumbildung.

Die erfindungsgemäßen flüssigen Färbepräparationen sind gekennzeichnet durch einen Gehalt von 10 bis 50 Gew.-% C.I. Reactive Blue 19, 5 bis 50 Gew.-% eines oder mehrerer anionischer Dispergiermittel aus der Gruppe der Alkalimetall-Ligninsulfonate oder aus der Gruppe der Kondensationsprodukte von Formaldehyd mit Naphthalinsulfosäure oder mit einer mit 1 bis 3 Alkylgruppen, von 1 bis 4 Kohlenstoffatome substituierten Naphthalinsulfosäure, 1 bis 30 Gew.-% des Natriumsalzes der Anthrachinon-2-sulfonsäure, 1-6 Gew.-% eines oder mehrerer Puffersubstanzen, die zu keiner die Farbstärke mindernden Reaktion mit dem Reaktivfarbstoff befähigt sind, 38 bis 83 Gew.-% Wasser und einen sauren pH-Wert.

Darüberhinaus können die erfindungsgemäßen flüssigen Färbepräparationen noch Konservierungsmittel gegen Pilz- und Bakterienbefall enthalten.

Anthrachinon-2-sulfosaures Natrium wird zwar in der DE-PS 2 412 964 und in der Europäischen Patentanmeldung Nr. 0 057 905 als eine von mehreren Zusatzkomponenten einer pulverförmigen Zubereitung von C.I. Reactive Blue 19 mit vorteilhaften Eigenschaften bei Klotz- und Ausziehfärbungen beschrieben. Aufgrund der literaturbekannten, äußerst geringen Wasserlöslichkeit von anthrachinon-2-sulfonsaurem Natrium (0,43% bei 20°C, s. Beilstein, Bd. 11, zweites Ergänzungswerk, S. 194) war jedoch nicht zu erwarten, daß die zur Verbesserung der Alkalibeständigkeit von Klotz- und Färbeflotten erforderliche Menge an anthrachinon-2-sulfonsaurem Natrium in den möglichst konzentrierten flüssigen Färbepräparationen überhaupt in Lösung zu bringen war. Obwohl die erfindungsgemäßen flüssigen Färbepräparationen wesentlich mehr anthrachinon-2-sulfonsaures Natrium enthalten als der Wasserlöslichkeit dieser Verbindung entspricht (1% anthrachinon-2-sulfonsaures Natrium in einer 83% Wasser enthaltenden flüssigen Färbepräparation entspricht einem Gehalt von 1,19% an anthrachinon-2-sulfonsaurem Natrium in der in der flüssigen Färbepräparation enthaltenden Wassermenge, womit man schon beim nahezu dreifachen Wert der Löslichkeit des anthrachinon-2-sulfonsauren Natriums in reinem Wasser liegt (bei den anderen beanspruchten Zusammensetzungen der Flüssigpräparationen ist die Konzentration an anthrachinon-2-sulfonsaurem Natrium, bezogen auf die darin enthaltene Wassermenge, noch höher), resultieren daraus keine der an sich zu erwartenden Nachteile wie Ausfällung bei Lagerung, insbesondere auch nicht bei Lagerung über längere Zeiträume von mehreren Wochen oder bei niedrigen Temperaturen unter 5°C.

Besonders bevorzugte flüssige Färbepräparationen enthalten 15-30 Gew.-% C.I. Reactive Blue 19, 5-30 Gew.-% eines Kondensationsproduktes aus Formaldehyd und Naphthalinsulfosäure, die durch 1 bis 3 niedere, 1 bis 4 Kohlenstoffatome enthaltende Alkylgruppen substituiert sein kann, 2-20 Gew.-% Natriumsalz der Anthrachinon-2-sulfonsäure, 1-5 Gew.-% einer oder mehrerer Puffersubstanzen, wie Alkalimetallsalze der Phosphorsäure und 40-77 Gew.-% Wasser und weisen einen sauren pH-Wert auf.

Die Herstellung der erfindungsgemäßen flüssigen Färbepräparationen erfolgt durch Lösen von C.I. Reactive Blue 19 in Wasser unter Zusatz eines oder mehrerer anionischer Dispergiermittel und unter Zusatz von anthrachinon-2-sulfonsaurem Natrium. Im einzelnen erfolgt die Herstellung so, daß C.I. Reactive Blue 19 in trockener oder feuchter Form, beispielsweise als feuchter Filterkuchen, bei Raumtemperatur oder bis 50°C erhöhter Temperatur zusammen mit einem oder mehreren anionischen Dispergiermitteln und anthrachinon-2-sulfonsaurem Natrium unter Rühren gelöst wird.

Eine weitere Herstellungsmöglichkeit besteht darin, ein oder mehrere anionische Dispergiermittel und anthrachinon-2-sulfonsaures Natrium der am Ende der Farbstoffsynthese vorliegenden Farbstofflösung zuzusetzen und gegebenenfalls zur Erreichung eines höheren Farbstoffgehaltes entweder einen Teil des Wassers unter vermindertem Druck abzudestillieren oder zusätzlich festes C.I. Reactive Blue 19, das durch Trocknung eines Teils der bei der Synthese erhaltenen Lösung erhalten wurde, einzutragen und zu lösen.

Die erfindungsgemäßen flüssigen Farbstoffzubereitungen von C.I. Reactive Blue 19 sind besonders lagerstabil und führen auch nach mehrwöchiger Lagerung weder bei Raumtemperatur noch bei bis 50°C erhöhter Temperatur oder bei einer Temperatur von 0°C zu keinerlei Ausfällung. Außerdem bleibt die Reaktivität des Farbstoffs unbeeinträchtigt, so daß kein Farbstärkeverlust auftritt. Darüberhinaus neigen weder die erfindungsgemäßen flüssigen Färbepräparationen noch die damit hergestellten Klotz- oder Färbeflotten noch daraus resultierende Abwässer zur Schaumbildung. Aufgrund dieser vorteilhaften Eigenschaften sind die erfindungsgemäßen Präparationen zum Färben und Bedrucken von natürlichen, wie Wolle und Seide, und synthetischen Polyamidfasermaterialien oder Fasermaterialien aus natürlicher oder regenerierter Cellulose, wie Baumwolle, Leinen, Zellwolle und Viskoseseide, sowie von Fasermischungen, die eine oder mehrere der genannten Faserarten enthalten, besonders geeignet. Die erfindungsgemäßen Färbepräparationen eignen sich insbesondere zur Bereitung von Klotz- und Färbeflotten mit ausgezeichneter Alkalibeständigkeit.

Die nachstehenden Beispiele dienen zur Erläuterung der Erfindung. Die angegebenen Teile und Prozentangaben beziehen sich auf das Gewicht.

Beispiel 1

Zu 550 Teilen einer bei der Herstellung von C.I. Reactive Blue 19 nach bekanntem Verfahren anfallenden Farbstofflösung mit 12,5 Gewichtsprozent Feststoffgehalt, entsprechend 10 Gewichtsprozent Reinfarbstoff, werden bei 45° bis 55°C unter Rühren 22,25 Teile eines Naphthalinsulfonsäure-Formaldehyd-Kondensationsprodukts, 8 Teile anthrachinon-2-sulfonsaures Natrium und 6 Teile Natriumdihydrogenphosphat eingetragen und gelöst. Nach einer Klärfiltration unter Zusatz von 5 Teilen eines Filterhilfsmittels werden der Lösung unter vermindertem Druck in einem Rotationsverdampfer 186,25 Teile Wasser entzogen. Man erhält 400 Teile einer 13,75 Gewichtsprozent Reinfarbstoff enthaltenden flüssigen Färbepräparation, die einen pH-Wert von 4,4 aufweist, mit 25 % der Farbstärke einer 55 Gewichtsprozent Reinfarbstoff enthaltenden pulverförmigen Handelsware von C.I. Reactive Blue 19. Diese flüssige Farbpräparation zeichnet sich durch sehr gute Lagerbeständigkeit bei niedrigen oder erhöhten Temperaturen aus, z.B. bei sechswöchiger Lagerung bei 50°C oder einwöchiger Lagerung bei 0°C, ohne daß Farbstoff- oder andere Abscheidungen auftreten. Die Farbstärke bleibt bei der Lagerung unter den genannten Bedingungen unverändert. Dies gilt auch für die Fließfähigkeit. Unter Verwendung dieser flüssigen Färbepräparation hergestellte Klotz- oder Färbeflotten besitzen eine sehr gute Alkalibeständigkeit und neigen ebensowenig zum Schäumen wie die flüssige Färbepräparation selbst.

Beispiel 2

65 Teile C.I. Reactive Blue 19 (Natriumsalz) mit einem Reinfarbstoffgehalt von 77,4 Gew.-% werden in 294 Teilen Wasser gelöst. Nach Erwärmung auf 50°C werden 10 Teile anthrachinon-2-sulfonsaures Natrium, 25 Teile Naphthalinsulfonsäure-Formaldehyd-Kondensationsprodukt, 4 Teile Natriumborat und 2 Teile Oxalsäure eingetragen und gelöst. Nach einer Klärfiltration unter Zusatz von 5 Teilen Filterhilfsmittel erhält man 400 Teile einer flüssigen Färbepräparation eines pH-Werts von 6, welche dieselben vorteilhaften Eigenschaften, wie sie in Beispiel 1 beschrieben sind, aufweist.

Beispiel 3

Verfährt man wie in Beispiel 1 beschrieben, jedoch unter Verwendung von 5 Teilen anthrachinon-2-sulfonsaurem Natrium und 30 Teilen Naphthalinsulfonsäure-Formaldehyd-Kondensationsprodukt und Einengung unter vermindertem Druck auf ebenfalls 400 Teile, so erhält man eine flüssige Färbepräparation mit denselben vorteilhaften Eigenschaften, wie sie in Beispiel 1 beschrieben sind.

Beispiel 4

Ersetzt man in Beispiel 1 das Naphthalinsulfosäure-Formaldehyd-Kondensationsprodukt durch ein Dimethylnaphthalinsulfonsäure-Formaldehyd-Kondensationsprodukt und verfährt im übrigen wie dort beschrieben, so erhält man eine flüssige Färbepräparation mit denselben vorteilhaften Eigenschaften, wie sie in Beispiel 1 beschrieben sind.

Beispiel 5

In 550 Teile einer bei der Herstellung von C.I. Reactive Blue 19 nach bekanntem Verfahren anfallenden Farbstofflösung mit 12,5 Gew.-% Feststoffgehalt entsprechend 10 Gew.-% Reinfarbstoff, werden bei 50°C unter Rühren 18 Teile eines Natriumligninsulfonats, 6 Teile anthrachinon-2-sulfonsaures Natrium und 6 Teile Natriumdihydrogenphosphat eingetragen und gelöst. Anschließend werden der Lösung am Rotationsverdampfer unter vermindertem Druck 280 Teile Wasser entzogen. Man erhält 300 Teile einer 18,33 Gew.-% Reinfarbstoff enthaltenden flüssigen Färbepräparation eines pH-Werts von 4,2, die ein Drittel der Farbstärke einer 55 Gew.-% Reinfarbstoff enthaltenden pulverförmigen Handelsware von C.I. Reactive Blue 19 aufweist. Diese flüssige Farbpräparation besitzt dieselben vorteilhaften Eigenschaften, wie sie in Beispiel 1 beschrieben sind.

Beispiel 6

600 Teile einer bei der Herstelung von C.I. Reative Blue 19 nach bekanntem Verfahren anfallenden Farbstofflösung mit 10,5 Gew.-% Feststoffgehalt bzw. 9,2 Gew.-% Reinfarbstoff werden bei 50-55°C unter Rühren mit 30 Teilen Naphthalinsulfosäure-Formaldehyd-Kondensationsprodukt, 5 Teilen anthrachinon-2-sulfonsaurem Natrium, 4 Teilen Natriumacetat und 2 Teilen Essigsäure versetzt und bis zur vollständigen Lösung 30 Minuten nachgerührt. Unter vermindertem Druck werden dann in einem Rotationsverdampfer 239 Teile Wasser abdestilliert. Man erhält 400 Teile einer flüssigen Färbepräparation mit 13,75 Gew.-% Reinfarbstoff und einem pH-Wert von 4,6, die 25% der Farbstärke einer 55 Gew.-% Reinfarbstoff enthaltenden pulverförmigen Handelsware von C.I. Reative Blue 19 besitzt und dieselben vorteilhaften Eigenschaften wie in Beispiel 1 beschrieben aufweist.

Beispiel 7

Ersetzt man im Beispiel 6 das Naphthalinsulfonsäure-Formaldehyd-Kondensationsprodukt durch dieselbe Menge eines Ethylnaphthalinsulfonsäure-Formaldehyd-Kondensationsproduktes oder eines Dimethylnaphthalinsulfonsäure-Formaldehyd-Kondensationsprodukt oder eines Natriumligninsulfonats oder einer Mischung von zwei oder mehreren dieser Produkte und verfährt im übrigen wie dort beschrieben, so erhält man eine flüssige Färbepräparation mit denselben vorteilhaften Eigenschaften, wie sie in Beispiel 1 beschrieben sind.

**Patentansprüche**

1. Flüssige, wasserhaltige Färbepräparation eines Reaktivfarbstoffs, gekennzeichnet durch einen Gehalt an 10-50 Gew.-% C.I. Reactive Blue 19, 5-50 Gew.-% eines oder mehrerer anionischer Dispergiermittel aus der Gruppe der Ligninsulfonate oder aus der Gruppe der Kondensationsprodukte von Formaldehyd mit Naphthalinsulfosäure oder mit einer durch 1 bis 3 Alkylgruppen von 1 bis 4 Kohlenstoffatome substituierten Naphthalinsulfosäure, 1-30 Gew.-% Natriumsalz der Anthrachinon-2-sulfonsäure, 1-6 Gew.-% eines oder mehrerer Puffersubstanzen, die zu keiner die Farbstärke mindernden Reaktion mit dem Reaktivfarbstoff befähigt sind, 38-83 Gew.-% Wasser und einen sauren pH-Wert.

2. Flüssige, wasserhaltige Färbepräparation eines Reaktivfarbstoffs gemäß Anspruch 1, dadurch gekennzeichnet, daß das darin enthaltene anionische Dispergiermittel ein Naphthalinsulfosäure-Formaldehyd-Kondensationsprodukt ist.

3. Flüssige, wasserhaltige Färbepräparation eines Reaktivfarbstoffs gemäß Anspruch 1, dadurch gekennzeichnet, daß das darin enthaltene anionische Dispergiermittel ein Alkylnaphthalinsulfosäure-Formaldehyd-Kondensationsprodukt mit Alkylgruppen von 1 bis 4 Kohlenstoffatomen ist.

4. Flüssige, wasserhaltige Färbepräparation eines Reaktivfarbstoffs gemäß Anspruch 1, dadurch gekennzeichnet, daß das anionische Dispergiermittel ein Alkalimetall-Ligninsulfonat ist.

5. Flüssige, wasserhaltige Färbepräparation eines Reaktivfarbstoffs gemäß Anspruch 1, dadurch gekennzeichnet, daß die Puffersubstanz ein Alkalimetallsalz der Phosphorsäure ist.

6. Verwendung einer in Ansprüchen 1-5 beschriebenen flüssigen wasserhaltigen Färbepräparation eines Reaktivfarbstoffs zum Färben oder Bedrucken von Fasermaterialien aus Wolle, Seide, Polyamid und natürlicher oder regenerierter Cellulose oder von Fasermaterialien, die eine oder mehrere der genannten Faserarten enthalten.

**Revendications**

1. Composition tinctoriale liquide aqueuse renfermant un colorant réactif, composition caractérisée en ce qu'elle contient de 10 à 50 % en poids du colorant C.I. Reactive Blue 19, de 5 à 50 % en poids d'un ou de plusieurs dispersants anioniques pris dans l'ensemble des ligninesulfonates ou dans l'ensemble des produits de condensation du formaldéhyde avec un acide naphtalène-sulfonique ou avec un acide naphtalène-sulfonique porteur d'un à trois radicaux alkyles contenant de 1 à 4 atomes de carbone, de 1 à 30 % en poids du sel sodique de l'acide anthraquinone-sulfonique-2, de 1 à 6 % en poids d'une ou de plusieurs substances tampons qui ne sont pas à même de donner, avec le colorant réactif, une réaction diminuant le pouvoir tinctorial, et de 38 à 83 % en poids d'eau, et en ce qu'elle a un pH acide.

2. Composition tinctoriale liquide aqueuse renfermant un colorant réactif, selon la revendication 1, composition caractérisée en ce que le dispersant anionique qu'elle contient est un produit résultant de la condensation d'un acide naphtalène-sulfonique avec le formaldéhyde.

3. Composition tinctoriale liquide aqueuse renfermant un colorant réactif, selon la revendication 1, caractérisée en ce que le dispersant anionique qu'elle contient est un produit résultant de la condensation d'un acide alkyl-naphtalène-sulfonique avec le formaldéhyde dont l'alkyle ou chacun des alkyles contient de 1 à 4 atomes de carbone.

4. Composition tinctoriale liquide aqueuse renfermant un colorant réactif, selon la revendication 1, caractérisée en ce que le dispersant anionique est un lignine-sulfonate de métal alcalin.

5. Composition tinctoriale liquide aqueuse renfermant un colorant réactif, selon la revendication 1, caractérisée en ce que la substance tampon est un sel de métal alcalin de l'acide phosphorique.

6. Application d'une composition tinctoriale liquide aqueuse renfermant un colorant réactif, telle que décrite dans l'une quelconque des revendications 1 à 5, à la teinture ou à l'impression de matières fibreuses en laine, en soie, en polyamides ou en cellulose naturelle ou régénérée, ou de matières fibreuses contenant une ou plusieurs des sortes de fibres mentionnées.

**Claims**

1. A liquid, water-containing dyeing formulation of a reactive dyestuff, which contains 10 - 50% by weight of C.I. Reactive Blue 19, 5 - 50% by weight of one or more anionic dispersants from the group of the ligninsulfonates or from the group of the condensation products of formaldehyde with naphthalenesulfonic acid or with a naphthalenesulfonic acid which is substituted by 1 to 3 alkyl groups of 1 to 4 carbon atoms, 1 - 30% by weight of the sodium salt of anthraquinone-2-sulfonic acid, 1 - 6% by weight of one or more buffer substances which are incapable of any reaction with the reactive dyestuff which reduces the dyeing strength, and 38 - 83% by weight of water, and has an acidic pH.

2. The liquid, water-containing dyeing formulation of a reactive dyestuff as claimed in claim 1, wherein the anionic dispersant contained therein is a naphthalenesulfonic acid/formaldehyde condensation product.

3. The liquid, water-containing dyeing formulation of a reactive dyestuff as claimed in claim 1, wherein the anionic dispersant contained therein is an alkylnaphthalenesulfonic acid/formaldehyde condensation product having alkyl groups of 1 to 4 carbon atoms.

4. The liquid, water-containing dyeing formulation of a reactive dyestuff as claimed in claim 1, wherein the anionic dispersant is an alkali metal ligninsulfonate.

5. The liquid, water-containing dyeing formulation of a reactive dyestuff as claimed in claim 1, wherein the buffer substance is an alkali metal salt of phosphoric acid.

6. The use of a liquid, water-containing dyeing formulation of a reactive dyestuff as is described in claims 1 - 5, for dyeing or printing wool, silk, polyamides and natural or regenerated cellulose fiber materials or fiber materials which contain one or more of said types of fiber.